# EUROPEAN PATENT APPLICATION

(11) **EP 4 618 367 A1**
(43) Date of publication of application: **17.09.2025**
(21) Application number: 25159742.3
(22) Date of filing: 24.02.2025
(51) Int. Cl.: H02J 7/14, B60H 1/00, B60H 1/32, H02J 7/34

(54) **SYSTEM AND METHOD FOR POWER SUPPLY MANAGEMENT IN A TRANSPORT REFRIGERATION UNIT**

(30) Priority: 15.03.2024 US 202463565632 P
(71) Applicant: Carrier Corporation, Palm Beach Gardens, FL 33418 (US)
(72) Inventor: BEAUFRERE, Florian, 76520 Franqueville-Saint-Pierre (FR); POURCHERESSE, Lionel, 76520 Franqueville-Saint-Pierre (FR); VADECARD, Jean-Michel, 76520 Franqueville-Saint-Pierre (FR); DUCHER, Gael, 76520 Franqueville-Saint-Pierre (FR); CHAKIACHVILI, Bruno, 76520 Franqueville-Saint-Pierre (FR); CHAROULET, Guillaume, 76520 Franqueville-Saint-Pierre (FR)
(74) Representative: Dehns

(57) **Abstract**

Disclosed herein is a power supply system (100) for a transport refrigeration unit (TRU) (102). The system (100) comprises a battery (110), and a generator (106) connected to the battery (110). The generator (106) is operatively coupled to an axle (108) of a trailer to generate electrical power upon rotation of the axle (108). The system (100) further comprises a controller (114) operatively coupled to the battery (110), the TRU (102), and the generator (106). The controller (114) is configured to monitor a real-time SoC of the battery (110), predict electrical power consumption of the TRU (102) for a trip of a predefined duration, monitor the rotational speed of the axle (108) and correspondingly determine electrical power available at the generator (106), and activate the generator (106) to generate and supply electrical power to the battery (110) and/or the TRU (102) based on the predicted electrical power consumptions, the real-time SoC of the battery (110), and the rotational speed of the axle (108) or the electrical power available at the generator (106).

## Description

### BACKGROUND

This invention relates to transport refrigeration units and power supply management systems, and more particularly, to a system, method, and control device for power supply management in a transport refrigeration unit (TRU) equipped with a battery and an axle generator.

### SUMMARY

According to a first aspect of the invention there is provided a power supply system for a transport refrigeration unit (TRU). The system comprises a battery electrically connected to one or more components of the TRU, a generator electrically connected to the battery, wherein the generator is operatively coupled to an axle of a trailer associated with the TRU and is configured to generate electrical power upon rotation of the axle and based on a rotational speed of the axle, and a controller operatively coupled to the battery, the TRU, and the generator. The controller is configured to monitor a real-time state of charge (SoC) of the battery or an amount of energy available in the battery, predict the electrical power consumption of the TRU for a trip of a predefined duration, based on data pertaining to an average electrical power consumption of the TRU being monitored over a predefined time and in real-time, monitor the rotational speed of the axle or speed of the trailer during the trip and correspondingly determine electrical power generated by or available at the generator, and activate the generator to generate and supply electrical power to the battery and/or the TRU during the trip based on one or more of the predicted electrical power consumptions of the TRU, the real-time SoC of the battery or the amount of energy available in the battery, and the rotational speed of the axle or speed of the trailer or the electrical power available at the generator.

Optionally, the controller is configured to adjust an activation duration of the generator during the trip to enable the generator to generate and supply a predefined electrical power to the battery for maintaining the SoC of the battery above a predefined SoC level or maintaining an amount of energy available in the battery to be above a predefined energy level during the trip for the predefined duration, wherein the predefined SoC level or the predefined energy level is selected based on the predicted electrical power consumption of the TRU during the trip and a power storage capacity of the battery.

Optionally, upon detecting the real-time SoC of the battery to be more than the predefined SoC level, the controller is configured to deactivate the generator and enable the supply of electrical power from the battery to the components of the TRU based on real-time electrical power consumption of the TRU.

Optionally, upon detecting the real-time SoC of the battery to be equal to or below the predefined SoC level, the controller is configured to activate the generator to generate and supply the electrical power to the battery to maintain the SoC of the battery above the predefined SoC level while enabling the supply of the electrical power from the battery to the components of the TRU based on real-time electrical power consumption of the TRU.

Optionally, the generator is electrically connected to the one or more components of the TRU, wherein upon detecting the real-time SoC of the battery to be equal to or below the predefined SoC level, the controller activates the generator to generate and supply electrical power from the generator to the TRU based on a real-time electrical power consumption of the TRU.

Optionally, upon detecting the electrical power generated by or available at the generator to be greater than a real-time electrical power consumption of the TRU and the real-time SoC of the battery is monitored to be equal or below the predefined SoC level, the controller enables the generator to supply electrical power from the generator to the TRU based on the real-time electrical power consumption of the TRU and the real-time rotational speed of the axle or speed of the trailer, while supplying a portion of the generated electrical power to the battery to charge the battery.

Optionally, the electrical power generated by or available at the generator is determined based on a generator power vs speed characteristic of the generator, wherein the generator power vs speed characteristic is determined based on one or more of the speed of rotation of the axle, parameters associated with the trailer and the generator, and one or more road attributes associated with a road on which the trailer is moving during the trip.

Optionally, the system comprises a first set of sensors to monitor the electrical power consumed by the one or more components or the TRU in real-time, a second set of sensors to monitor the real-time SoC of the battery, and a third set of sensors to monitor the rotational speed of the axle, and the one or more road attributes associated with the road during the trip and correspondingly determine electrical power generated by or available at the generator.

Optionally, the controller is configured to compute and monitor the SoC of the battery or remaining energy available in the battery using a Battery Management System (BMS) associated with the battery, wherein the SoC is indicative of electrical power stored or available in the battery.

Optionally, the generator is configured with a power conversion apparatus to convert the electrical power generated by the generator into DC power for the battery and/or into AC or DC power for the components of the TRU.

According to a second aspect of the invention there is provided a method for power supply management in a transport refrigeration unit (TRU) equipped with an engine and a battery. The method comprises monitoring, by a controller, a real-time state of charge (SoC) of the battery or an amount of energy available in the battery; predicting, by the controller, electrical power consumption of the TRU for a trip of a predefined duration, based on data pertaining to an average electrical power consumption of the TRU being monitored over a predefined time and in real-time, monitoring, by the controller, rotational speed of the axle or speed of a trailer associated with the TRU during the trip and correspondingly determine electrical power generated by or available at a generator, and activating, by the controller, the generator for generating and supplying electrical power to the battery and/or the TRU during the trip based on one or more of the predicted electrical power consumptions of the TRU, the real-time SoC of the battery or the amount of energy available in the battery, and the rotational speed of the axle or speed of the trailer or the electrical power available at the generator.

Optionally, the method comprises the step of adjusting, by the controller, an activation duration of the generator during the trip to enable the generator to generate and supply a predefined electrical power to the battery for maintaining the SoC of the battery above a predefined SoC level during the trip, wherein the predefined SoC level is selected based the predicted electrical power consumption of the TRU during the trip and a power storage capacity of the battery.

Optionally, the method comprises the step of deactivating the generator, by the controller, and enabling the supply of the electrical power from the battery to the components of the TRU based on a real-time electrical power consumption of the TRU, when the real-time SoC of the battery is more than the predefined SoC level.

Optionally, when the real-time SoC of the battery reaches a first predefined SoC level, the method comprises the step of activating the generator for generating and supplying the electrical power to the battery until the real-time SoC of the battery reaches a second predefined SoC level, wherein second predefined SoC level is more than the first predefined SoC level.

Optionally, the method comprises the step of activating the generator, by the controller, for generating and supplying the electrical power to the battery to maintain the SoC of the battery above the predefined SoC level while enabling the supply of the electrical power from the battery to the components of the TRU based on a real-time electrical power consumption of the TRU, when the real-time SoC of the battery is equal to or below the predefined SoC level.

Optionally, the generator is electrically connected to the one or more components of the TRU, wherein when the real-time SoC of the battery is equal to or below the predefined SoC level, the method comprises the step of activating the generator to generate and supply electrical power from the generator to the TRU based on a real-time electrical power consumption of the TRU.

Optionally, when the electrical power generated by or available at the generator is determined to be greater than the real-time electrical power consumption of the TRU and the real-time SoC of the battery is monitored to be equal or below the predefined SoC level, the method comprises the step of enabling the generator is supply electrical power from the generator to the TRU based on the real-time electrical power consumption of the TRU and the real-time rotational speed of the axle or speed of the trailer, while supplying a portion of the generated electrical power to the battery to charge the battery.

Optionally, the electrical power generated by or available at the generator is determined based on a generator power vs speed characteristics of the generator, wherein the generator power vs one or more speed characteristics is determined based on one or more of the speed of rotation of the axle, parameters associated with the trailer and the generator, and one or more road attributes associated with a road on which the trailer is moving during the trip.

According to a third aspect of the invention there is provided a power supply control device for a transport refrigeration unit (TRU) equipped with a battery and an axle generator. The device comprises a controller configured to be operatively connected to the TRU, the generator, and a battery management system (BMS) associated with the battery, wherein the controller comprises one or more processors coupled to a memory storing instructions executable by the processors, which causes the controller to monitor a real-time state of charge (SoC) of the battery, predict electrical power consumption of the TRU for a trip of a predefined duration, based on data pertaining to an average electrical power consumption of the TRU being monitored over a predefined time and in real-time, monitor rotational speed of the axle or speed of the trailer during the trip and correspondingly determine electrical power generated by or available at the generator, and activate the generator to generate and supply electrical power to the battery and/or the TRU during the trip based on one or more of the predicted electrical power consumptions of the TRU, the real-time SoC of the battery, and the rotational speed of the axle or speed of the trailer or the electrical power available at the generator.

Optionally, the device comprises a first set of sensors to monitor the electrical power consumed by the one or more components or the TRU in real-time and monitor the electrical power generated by the generator, a second set of sensors to monitor the real-time state of charge (SoC) of the battery, and a third set of sensors to monitor the rotational speed of the axle, and the one or more road attributes associated with the road during the trip and correspondingly determine electrical power generated by or available at the generator.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention by way of example only and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B illustrate exemplary representations of the system for enabling power supply management in a transport refrigeration unit (TRU) equipped with an axle generator and a battery.
FIG. 2 illustrates an exemplary block diagram depicting functional modules of the power supply control device for the TRU.
FIG. 3 illustrates exemplary steps involved in a method for enabling power supply management in a transport refrigeration unit (TRU) equipped with an axle generator and a battery.
FIG. 4 illustrates an exemplary plot depicting variation in the battery SoC, the trailer's speed, the generator power, and the electrical power consumption of the TRU.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

Transport refrigeration units (TRUs), commonly known as reefer units, are essential allowing for the safe and efficient transport of perishable goods over long distances. These units may rely on a battery or external power source to power the TRU. An important aspect of these systems is ensuring a consistent and reliable power source, not only for the refrigeration process but also for the auxiliary systems that support the unit's operation, including the battery system that powers electronic controls, safety systems, and other essential components.

Existing reefer units involve an axle generator for powering the TRU and the battery. The generator may be configured with an axle or a wheel hub associated with a trailer (or a vehicle or container) on which the TRU is installed. The generator may generate energy for supplying power to the TRU, and charging the battery upon movement of the trailer or rotation of the axle above a certain speed. However, this setup has been identified as inefficient in terms of energy use. Specifically, it has been observed that the trailer is driven using a combustion engine where fuel burning becomes particularly challenging. Speeding not only increases fuel consumption but also leads to higher maintenance costs and increased emissions.

Embodiments of the invention overcomes the above-mentioned shortcomings and limitations associated with the existing generator-based reefer units/TRUs and associated power supply management, by providing an improved, cost-effective, and efficient solution that optimizes the electrical power usage in reefer units/TRU, ensuring that the generator and the battery are effectively and efficiently utilized without compromising the operation of the TRU.

In one or more embodiments, the transport refrigeration unit (TRU) of the invention may be installed on a container or trailer associated with a vehicle (also referred to as a trailer or prime mover, herein). The TRU may be configured to maintain a conditioned environment in an enclosed (storage or conservation) space within the container/trailer. Various products including but not limited to pharmaceutical and nutraceutical products, and perishable items such as foods and beverages, and the like may be stored and transported in the container/trailer. The TRU may maintain the environment of the storage space at a specific or user-defined temperature and/or humidity, based on the stored products, to keep the stored products in a healthy condition while transporting and comply with product compliance regulations.

The TRU may be installed on the container/trailer associated with one or more trailers including but not limited to an electric truck, a semi-electric truck, and a non-electric truck such that the TRU remains fluidically connected to the ambient and further remains fluidically connected to the storage space of the container/trailer. Accordingly, based on the environment to be maintained in the storage space or based on the products to be transported, the TRU may be operated to adjust its cooling capacity and supply conditioned air within the storage space. In addition, an axle which is a central shaft of the trailer rotates to provide power to the wheels by transmitting power from the engine to the wheels, allowing the trailer to move. The axles can be found in both front and rear positions on the trailer, and the axles can be powered or non-powered, depending on the vehicle's configuration. The powered axles receive power from the engine, while the non-powered axles support the weight of the trailer and a load associated with the trailer.

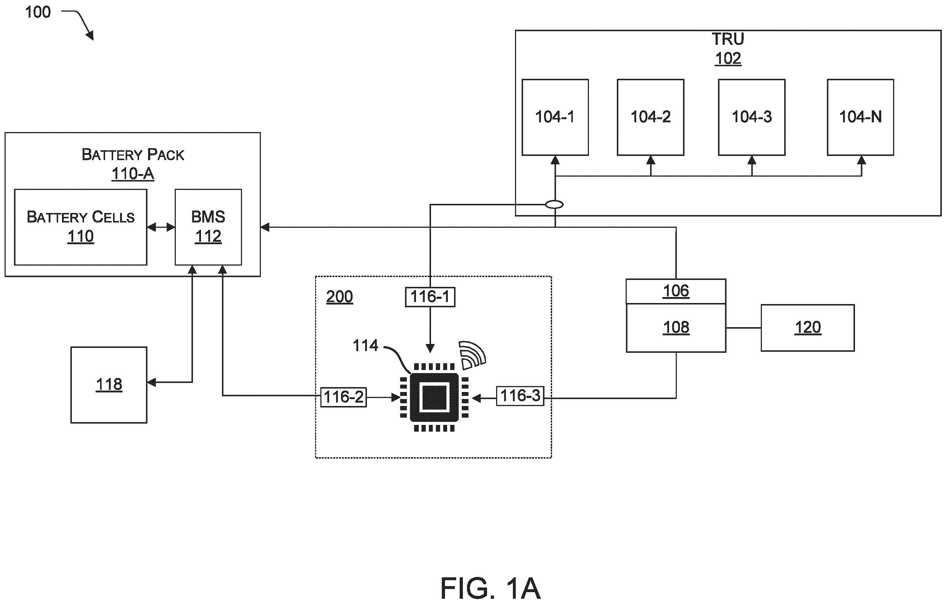

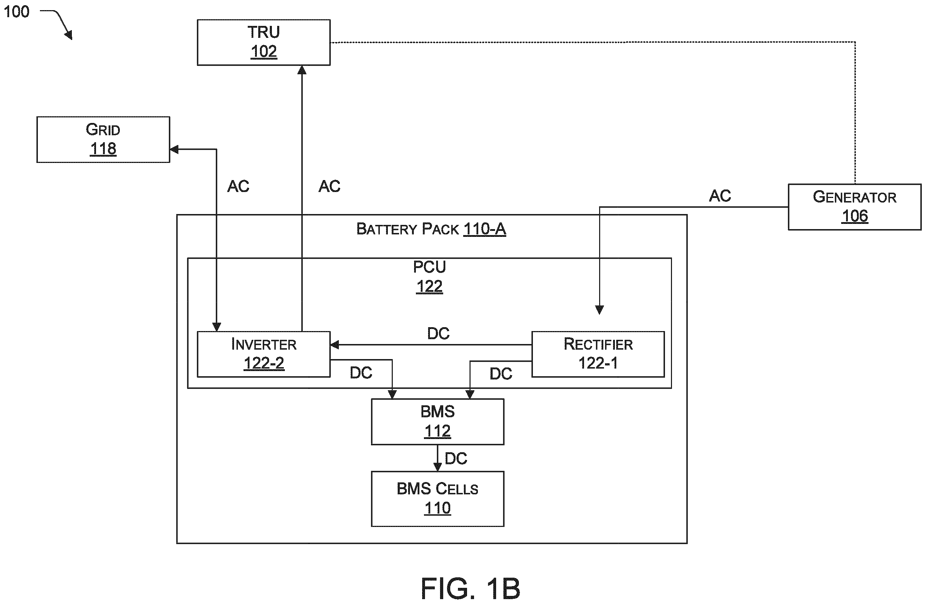

Referring to FIGs. 1A and 1B, a power supply system 100 (also referred to as a system 100, herein) for the transport refrigeration unit (TRU) 102 is disclosed. The system 100 may include a generator 106 (also referred to as an axle generator or hub generator, herein) that may be operatively coupled to an axle or a wheel hub 108 associated with the trailer (not shown). Further, an engine 120 associated with the prime mover or vehicle may be configured to drive the trailer which may cause the axle or wheel hub 108 of the trailer to rotate, thereby actuating the generator 106 to generate electrical power based the rotational speed of the axle/hub 108 or speed of the trailer. In addition, the system 100 may include a battery 110 configured with a battery monitoring system (BMS) 112. In one or more embodiments, the system 100 may include an existing battery and BMS associated with the vehicle or TRU 102. However, in other embodiments, the battery 110 and BMS 112 may also be additionally installed on the TRU 102 or vehicle associated with the TRU 102.

The battery 110 may be electrically connected to the generator 106 via the BMS 112. In addition, the battery 110 may also be configured to be electrically connected to an external electrical power source 118 such as but not limited to an electrical grid. The BMS 112 may be configured to control the charging of the battery 110 via the generator 106 or the grid 118, and further enable the supply of electrical power from the battery 110 to one or more components 104-1 to 104-N (collectively designated as 104, herein) of the TRU 102 or the trailer. Further, the battery 110 and the generator 106 may be electrically coupled to the components 104 of the TRU 102. In one or more embodiments, the components 104-1 to 104-N of the TRU 102 may include but are not limited to a compressor, condenser fan, evaporator fan, and electric heater.

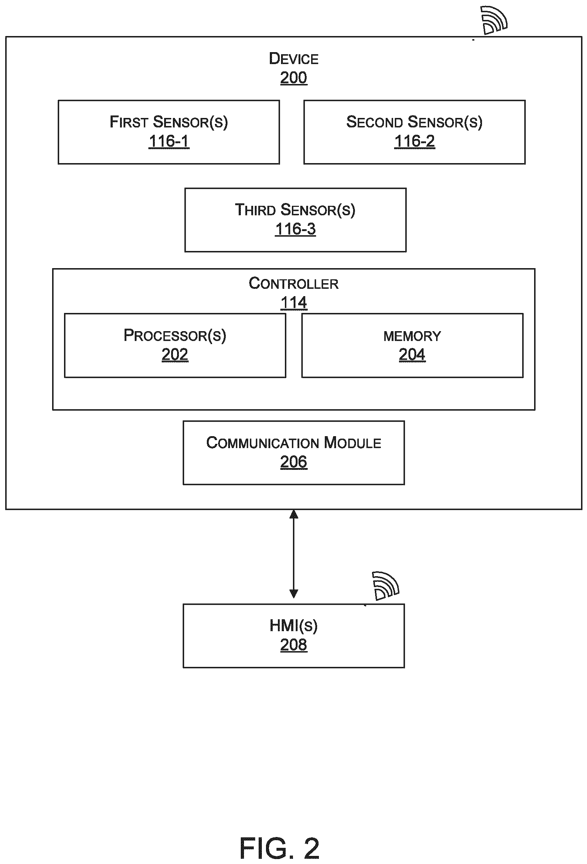

In one or more embodiments, the system 100 may include a power supply control device 200 (also referred to as a device 200, herein) configured to be connected to the generator 106, the battery 110, the BMS 112, and the components 104 of the TRU 102. The device 200 may be retrofitted in existing TRUs being equipped with an axle generator 108 and a battery 110. Referring to FIGs. 1A and 2, the device 200 may include a first set of sensors 116-1 electrically configured with the components 104 of the TRU 102 and the generator 106, to monitor the electrical power consumed by the components 104 or the TRU 102 in real-time, and also monitor the electrical power generated by the generator 106. Further, the device 200 may include a second set of sensors 116-2 operatively configured with the BMS 112 associated with the battery 110 to monitor the real-time state of charge (SoC) of the battery 110. Furthermore, the device 200 may include a third set of sensors 116-3 operatively configured with the axle 108 of the trailer to monitor the rotational speed of the axle 108 and the road attributes associated with the road during the trip. The rotational speed of the axle 108 and the road attributes associated with the road may allow the device 200 to determine electrical power generated by or available at the generator 106. The road attributes may include, but are not limited to: an inclination, a gradient, a downhill condition, and the like.

In one or more embodiments, the first and second set of sensors 116-1, 116-2 may include a current sensor, a voltage sensor, a watt meter, an energy meter, and a frequency and phase meter, but is not limited to the like. Further, the third set of sensors 116-3 may include an inclinometer (Tilt Sensor), accelerometer, gyroscope, GPS sensor, speed Sensor (wheel or axle speed sensor), and gradient sensor, but is not limited to the like.

The system 100 or device 200 may further include a controller 114 in communication with the first, second and third set of sensors 116-1, 116-2, 116-3 and further operatively connected to the generator 106, the BMS 112, and the components 104 of the TRU 102. The controller 114 may comprise one or more processors 202 coupled to a memory 204 storing instructions executable by the processors 202, which causes the controller 114 to perform one or more designated operations.

In one or more embodiments, the controller 114 may be configured to monitor the electrical power consumption of the TRU 102 over a duration for one or more trips (previous trips and/or an ongoing trip) using the first set of sensors 116-1. This may allow the controller 114 to determine the average electrical power consumption of the TRU 102 for the ongoing or upcoming trips. The controller 114 may accordingly predict the electrical power consumption of the TRU 102 for the trip (ongoing trip) of a predefined duration, based on the determined average electrical power consumption of the TRU 102. The predefined duration of the trip herein corresponds to the effective operational duration of the TRU during the trip which includes the ON duration of the TRU, excluding the OFF duration during the trip. For instance, if the total trip duration is 4 hours, but the TRU may be turned off for 30 minutes during that trip, the trip's effective duration is 3.5 hours. Consequently, the electrical power consumption of the TRU is calculated based on 3.5 hours, not the full 4 hours.

Further, the controller 114 may monitor the real-time SoC of the battery or an amount of energy available in the battery using the second set of sensors 116-2. The controller 114 may further monitor the rotational speed of the axle or speed of the trailer during the ongoing trip using the third set of sensors 116-3 and correspondingly determine the electrical power that may be available at or generated by the generator 106. Accordingly, the controller 114 may actuate the generator 106 to generate and supply electrical power available at the generator 106 to the battery 110 and/or the TRU 102 during the ongoing trip based on one or more of the predicted electrical power consumptions of the TRU 102, the real-time SoC of the battery 110 or the amount of energy available in the battery 110, and the rotational speed of the axle 108 or speed of the trailer or the electrical power available at the generator 106. In one or more embodiments, the controller 114 may activate the generator 106 by operably engaging a drive shaft of the generator 106 with the axle 108 of the trailer using one or more actuators, which may cause the drive shaft to rotate along with the axle 108, resulting in the generation of the electrical power.

In one or more embodiments, the controller 114 may be configured to adjust the activation duration of the generator 106 during the trip to enable the generator 106 to generate and supply a predefined electrical power to the battery 110 for maintaining the SoC of the battery 110 above a predefined SoC level or maintaining an amount of energy available in the battery to be above a predefined energy level during the trip for the predefined duration. The predefined SoC level or the predefined energy level may be selected based on the predicted electrical power consumption of the TRU 102 during the trip and the power storage capacity (rating) of the battery 110.

In a non-limiting example, for a battery with a capacity of 4 kilowatt-hours (kWh), if the TRU is predicted to consume 1 kilowatt (kW) per hour, the TRU may operate for 4 hours (4 kWh / 1 kW = 4 hours) before the battery is depleted. Accordingly, for a 1-hour trip, the predefined SoC level of the battery may be selected as 25% of the battery capacity. This may allow the battery to power the TRU for at least 1 hour without depending on the generator or grid power. In another non-limiting example, if the consumption rate of the TRU doubles to 2 kW per hour, the operational time of the TRU is halved, resulting in only 2 hours of operation (4 kWh / 2 kW = 2 hours) before the battery is depleted. In such a scenario, for a 1-hour trip, the predefined SoC level of the battery may be selected as 50% of the battery capacity, allowing the battery to power the TRU for at least 2 hours without depending on the generator.

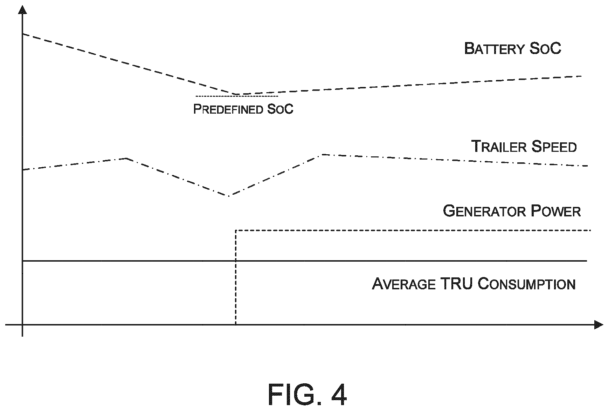

Referring to FIG. 4, an exemplary plot depicting variation in the battery SoC, the trailer's speed, the generator power, and the electrical power consumption of the TRU 102 during a trip is illustrated. As depicted, the generator 106 remains off and does not produce power if the battery's SoC stays above the predefined threshold. However, once the battery's SoC drops to this predefined level, the generator 106 activates to generate and supply power to the battery 110, thereby maintaining the battery's SoC above the set threshold. The power output of the generator may correspond to the rotational speed of the axle or the vehicle's speed (trailer).

In one or more embodiments, upon detecting the real-time SoC of battery 110 to be more than the predefined SoC level during the trip, the controller 114 may deactivate or disengage the generator 106 from the axle to restrict the generator 106 from generating electrical power. Further, the controller 114 may actuate the BMS 112 to enable the supply of electrical power from the battery 110 to the components of the TRU 102 based on real-time electrical power consumption of the TRU 102. In a non-limiting example, if the predefined SoC level is determined and set at 25%, and the real-time SoC of the battery remains above 25% while powering the TRU 102, the controller 114 may keep the generator 106 deactivated. This may help reduce the amount of fuel burned by the engine 120 of the trailer to drive the generator 106 during the trip, thereby making the overall system efficient and cost-effective, without compromising the operation of the TRU 102.

Further, in one or more embodiments, upon detecting the real-time SoC of the battery 110 to be equal to or below the predefined SoC level, the controller 114 may be configured to activate the generator 106 to generate and supply the electrical power to the battery 110. In a non-limiting example, if the predefined SoC level is determined and set to be 25%, but the real-time SoC of the battery 110 reaches or goes below 25% while powering the TRU 102, the controller 114 may activate the generator 106 to supply electrical power to the battery 110.

In one or more embodiments, the generator 106 may also be directly electrically connected to the TRU 102. In such embodiments, upon detecting the real-time SoC of the battery 110 to equal to or below the predefined SoC level, the controller 114 may be configured to activate the generator 106 to generate and supply the electrical power directly to the TRU 102 and/or the battery 110. This may allow the system to maintain the SoC of battery 110 above the predefined SoC level while powering the components of the TRU 102 based on the real-time electrical power consumption of the TRU 102.

Furthermore, in one or more embodiments, upon detecting the electrical power generated by or available at the generator 106 to be greater than the real-time electrical power consumption of the TRU 102 and the real-time SoC of the battery 110 is determined to be equal or below the predefined SoC level, the controller 114 may enable the generator 106 to generate and supply electrical power from the generator 106 to the TRU 102 based on the real-time electrical power consumption of the TRU 102 and the real-time rotational speed of the axle or 108 speed of the trailer. In a non-limiting example, if the predefined SoC level of the battery 110 is set at 25%, and the real-time SoC of the battery 110 drops below this threshold while powering the TRU 102, but the power available from the generator 106 is detected to exceed the TRU's 102 real-time power consumption. In such a scenario, the controller 114 may activate the generator 106 to supply electrical power directly to the battery 110 while also powering the TRU. This arrangement may help maintain the battery's SoC above the predefined level and ensure that the power supply to the TRU 102 is not compromised.

Further, while supplying a portion of the generated electrical power to the battery 110 to charge the battery 110, the electrical power generated by or available at the generator 106 is determined based on a generator power vs one or more speed characteristics of the generator 112. The generator power vs the one or more speed characteristics is determined based on one or more of the speed of rotation of the axle, parameters associated with the trailer and the generator 106, and the road attributes associated with the road on which the trailer is moving during the trip. For instance, in a not limiting example, the generator may generate 0 to 3 KW of power when the trailer moves at 30km/hr. Similarly, the generator may generate 0 to 15 KW of power when the trailer moves at 90km/hr.

Furthermore, in one or more embodiments, the BMS 112 may further connect the battery 110 to the external power source 118 such as an electrical grid which may supply electrical power to the battery 110 when the trailer is stationary and the real-time SoC level of the battery 110 is detected to be less than the predefined SoC level. Further, in one or more embodiments, the controller 114 may generate an alert signal to inform a driver or user about stopping the trailer and charging the battery 110, to keep the TRU operational.

In one or more embodiments, the system 100 or device 200 may include one or more human-machine interfaces (HMI) (208 as shown in FIG. 2) in communication with the controller 114. The controller 114 may allow one or more registered users to monitor one or more of the real-time electrical power consumptions of the TRU 102, the electrical power generated by the generator 106, the state of charge (SOC) or electrical power stored or available in the battery 110, and the electrical power supplied by the generator 106 to the battery 110. In one or more embodiments, the HMI 208 may be installed in a cabin of the trailer or vehicle and/or within the container/trailer on which the TRU is installed. Further, in some embodiments, the HMI 208 may also be mobile phones or other portable computing device 200s associated with the users but is not limited to the like.

In one or more embodiments, the device 200 may include a communication module 206 operatively coupled to the controller 114, which may enable the device 200 to establish a secured communication with the sensors, the BMS 112, the HMIs 208, and various other components 104 associated with the TRU 102 and vehicle. The communication module 206 may be wired media and/or wireless media. For instance, the communication module may be a transceiver but not limited to the like, that may include but is not limited to, an antenna, an Ethernet port, a USB port, or any other port that may be configured to receive and transmit location and attributes data. Further, in one or more embodiments, the communication module 206 may include ethernet modules, Wi-Fi modules, Bluetooth modules, Zigbee modules, GSM/GPRS modules, LoRa modules, 5G modules, RS-232/RS-485 serial communication modules, CAN (Controller Area Network) modules, but not limited to the like.

Referring to FIG. 1A and 1B, in one or more embodiments, the battery 110 and the BMS 112 may be packaged as a battery pack 110-A. The battery pack 110-A may include one or more battery cell modules (also referred to as battery cells 110, herein), and a power conversion unit (PCU) 122 to convert electrical power received and/or supplied by the battery 110 in a predetermined range suitable for the battery cells 110, the TRU 102, and the grid (external power sources) 118. The battery pack 110-A may further include one or more interfaces to facilitate the connection of the battery 110 pack with the TRU 102, the generator 106, the controller 114, and the grid 118.

In one or more embodiments, the PCU 122 within the battery pack 110-A or BMS 112 may facilitate in managing and converting electrical power to ensure optimal performance, efficiency, and compatibility with connected loads (TRU) or charging sources (generator 106 or external power source 118). The PCU 122 may include one or more rectifiers 122-1, one or more inverters 122-2, and/or one or more DC-DC converters (not shown). The rectifier(s) 122-1 may be configured to convert the AC power supplied by the generator 106 or external power source 118 into DC power for the battery cells 110. Further, the inverters 122-2 may be configured to convert the DC power level output by the battery cells 110 into AC power for the AC power-based components 104 of the TRU 102 during the charging operation mode or power supply mode and/or to the grid 118 during the power export mode. Furthermore, the DC-DC converter may be configured to adjust the DC power level output by the battery cells 110 to match the input DC level for the DC power-based components 104 of the TRU 102 during the power supply mode. In addition, in one or more embodiments, the PCU 122 may include a bi-directional AC-DC convertor (operating as the rectifier 122-1 as well as the inverter 122-2) configured to facilitate electrical power exchange between the battery cells 110 and the grid 118 (external power source). The PCU 122 may accordingly facilitate maximizing energy utilization and protection of the battery cells 110 from over-voltage or under-voltage conditions.

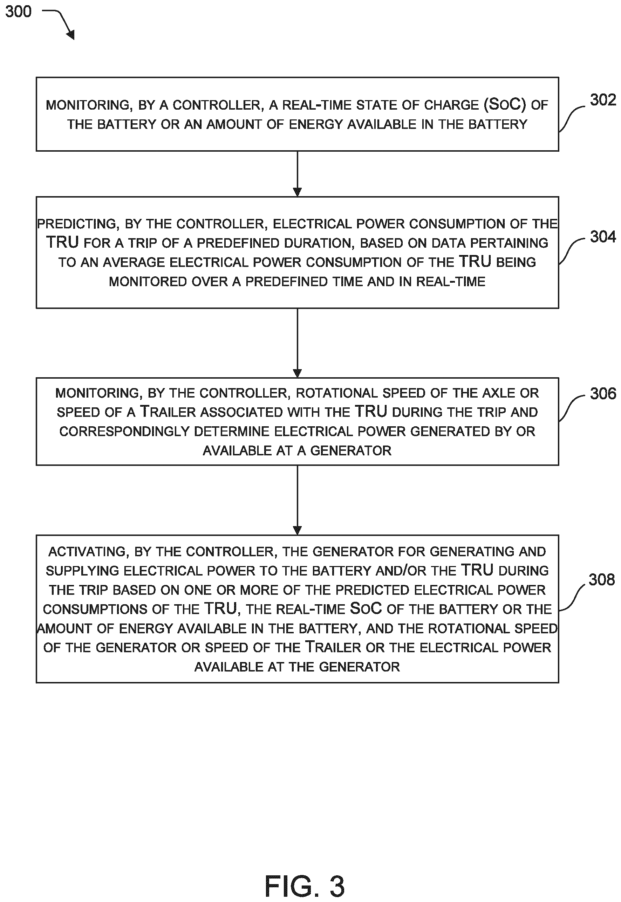

Referring to FIG. 3, method 300 for enabling power supply management in a transport refrigeration unit (TRU) is disclosed. Method 300 may involve the battery 110, the BMS 112, the generator 106, the device 200, and other components associated with the system of FIGs. 1A and 1B. Method 300 may include step 302 of monitoring a real-time state of charge (SoC) of the battery, followed by step 304 of predicting the electrical power consumption of the TRU for a trip of a predefined duration. The electrical power consumption of the TRU may be predicted based on data pertaining to an average electrical power consumption of the TRU for one or more trips (previous and/or ongoing trips) being monitored over a duration. The device or sensors may facilitate in monitoring the electrical power consumption of the TRU and the SoC maintained by the battery at steps 302, and 304. Further, method 300 may include step 306 of monitoring the rotational speed of the axle or speed of the trailer associated with the TRU during the ongoing trip and correspondingly determine electrical power generated by or available at a generator. Accordingly, method 300 may include step 308 of activating the generator for generating and supplying electrical power to the battery and/or the TRU during the trip based on one or more of the predicted electrical power consumptions of the TRU, the real-time SoC of the battery, and the speed of the trailer or the electrical power available at the generator.

In one or more embodiments, method 300 may include the step of adjusting an activation duration of the generator during the trip to enable the generator to generate and supply a predefined electrical power to the battery for maintaining the SoC of the battery above a predefined SoC level during the trip. This predefined SoC level may be selected based on the predicted electrical power consumption of the TRU during the trip and the power storage capacity of the battery.

In one or more embodiments, when the real-time SoC of the battery is more than the predefined SoC level during the trip, method 300 may include the steps of deactivating or disengaging the generator from the axle to restrict the generator from generating electrical power. Further, method 300 may include the steps of actuating the BMS to enable the supply of the electrical power from the battery to the components of the TRU based on the real-time electrical power consumption of the TRU. This may help reduce the amount of fuel burned by the engine of the trailer to drive the generator during the trip, thereby making the overall system efficient and cost-effective, without compromising the operation of the TRU.

In one or more embodiments, when the real-time SoC of the battery reaches a first predefined SoC level, method 300 may comprise the steps of activating the generator for generating and supplying the electrical power to the battery until the real-time SoC of the battery reaches a second predefined SoC level. This second predefined SoC level can be more than the first predefined SoC level. For instance, in a non-limiting example, once the SoC reaches a first predefined SoC level (say 30%), the generator may be kept activated to charge the battery until the SoC of the battery reaches first predefined SoC level (say 40%). This may help prevent frequent activation or deactivation of the generator.

Further, in one or more embodiments, when the real-time SoC of the battery is equal to or below the predefined SoC level, method 300 may include the steps of activating the generator to generate and supply the electrical power to the battery.

In one or more embodiments, the generator may also be directly electrically connected to the TRU. In such embodiments, when the real-time SoC of the battery is equal to or below the predefined SoC level, method 300 may include the steps activating the generator to generate and supply the electrical power directly to the TRU and/or the battery. This may allow the system to maintain the SoC of the battery above the predefined SoC level while powering the components of the TRU based on the real-time electrical power consumption of the TRU.

Furthermore, in one or more embodiments, when the electrical power generated by or available at the generator is greater than real-time electrical power consumption of the TRU and the real-time SoC of the battery is equal or below the predefined SoC level, method 300 may include the steps of enabling the generator to generate and supply electrical power from the generator to the TRU based on the real-time electrical power consumption of the TRU and the real-time rotational speed of the axle or speed of the trailer. This may help maintain the battery's SoC above the predefined level and ensure that the power supply to the TRU is not compromised.

Thus, this invention (system, device, and method) overcomes the shortcomings and limitations associated with the existing generator-based reefer units/TRUs and associated power supply management, by providing an improved, cost-effective, and efficient solution that optimizes the electrical power usage in reefer units/TRU, ensuring that the generator and the battery are effectively and efficiently utilized without compromising the operation of the TRU.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A power supply system (100) for a transport refrigeration unit, TRU, (102), wherein the system comprises:
a battery (110) electrically connected to one or more components (104) of the TRU;
a generator (106) electrically connected to the battery, wherein the generator is operatively coupled to an axle (108) of a trailer associated with the TRU, the generator configured to generate electrical power upon rotation of the axle and based on a rotational speed of the axle; and
a controller (114) operatively coupled to the battery, the TRU, and the generator, wherein the controller is configured to:
monitor a real-time state of charge, SoC, of the battery or an amount of energy available in the battery;
predict electrical power consumption of the TRU for a trip of a predefined duration, based on data pertaining to an average electrical power consumption of the TRU being monitored over a predefined time and in real-time;
monitor the rotational speed of the axle or speed of the trailer during the trip and correspondingly determine electrical power generated by or available at the generator; and
activate the generator to generate and supply electrical power to the battery and/or the TRU during the trip based on one or more of the predicted electrical power consumptions of the TRU, the real-time SoC of the battery or the amount of energy available in the battery, and the rotational speed of the axle or the speed of the trailer or the electrical power available at the generator.

2. The system (100) of claim 1, wherein the controller (114) is configured to adjust an activation duration of the generator (106) during the trip to enable the generator to generate and supply a predefined electrical power to the battery (110) for maintaining the SoC of the battery above a predefined SoC level or maintaining an amount of energy available in the battery to be above a predefined energy level during the trip for the predefined duration, wherein the predefined SoC level is selected based on the predicted electrical power consumption of the TRU (102) during the trip and a power storage capacity of the battery.

3. The system (100) of claim 2, wherein upon detecting the real-time SoC of the battery (110) to be more than the predefined SoC level, the controller (114) is configured to deactivate the generator (106) and enable the supply of electrical power from the battery to the components (104) of the TRU (102) based on real-time electrical power consumption of the TRU.
and/or, wherein upon detecting the real-time SoC of the battery (110) to be equal to or below the predefined SoC level, the controller (114) is configured to activate the generator (106) to generate and supply the electrical power to the battery to maintain the SoC of the battery above the predefined SoC level while enabling the supply of electrical power from the battery to the components (104) of the TRU (102) based on real-time electrical power consumption of the TRU.

4. The system (100) of claims 2 or 3, wherein the generator (106) is electrically connected to the one or more components (104) of the TRU (102), wherein upon detecting the real-time SoC of the battery (110) to be equal to or below the predefined SoC level, the controller (114) activates the generator to generate and supply electrical power from the generator to the TRU based on a real-time electrical power consumption of the TRU,
optionally, wherein upon detecting the electrical power generated by or available at the generator to be greater than the real-time electrical power consumption of the TRU and the real-time SoC of the battery is monitored to be equal or below the predefined SoC level, the controller enables the generator to supply electrical power from the generator to the TRU based on the real-time electrical power consumption of the TRU and the real-time speed of the trailer or rotational speed of the axle, while supplying a portion of the generated electrical power to the battery to charge the battery.

5. The system (100) of any preceding claim, wherein the electrical power generated by or available at the generator (106) is determined based on a generator power vs speed characteristic of the generator, wherein the generator power vs speed characteristic is determined based on one or more of the speed of rotation of the axle (108), parameters associated with the trailer and the generator, and one or more road attributes associated with a road on which the trailer is moving during the trip.

6. The system (100) of any preceding claim, wherein the system comprises:
a first set of sensors (116-1) to monitor the electrical power consumed by the one or more components (104) or the TRU (102) in real-time;
a second set of sensors (116-2) to monitor the real-time SoC of the battery (110) or the amount of energy available in the battery; and
a third set of sensors (116-3) to monitor the rotational speed of the axle (108), and the one or more road attributes associated with the road during the trip and correspondingly determine electrical power generated by or available at the generator (106).

7. The system of any preceding claim, wherein the controller (114) is configured to:
compute and monitor the SoC of the battery (110) or remaining energy available in the battery using a Battery Management System, BMS, (112) associated with the battery, wherein the SoC is indicative of electrical power stored or available in the battery,
and/or, wherein the generator (106) is configured with a power conversion unit (122) to convert the electrical power generated by the generator into DC power for the battery and/or into AC or DC power for the components (104) of the TRU (102).

8. A method for power supply management in a transport refrigeration unit, TRU, (102) equipped with an engine (120) and a battery (110), wherein the method comprising:
monitoring, by a controller (114), a real-time state of charge, SoC, of the battery or an amount of energy available in the battery;
predicting, by the controller, electrical power consumption of the TRU for a trip of a predefined duration, based on data pertaining to an average electrical power consumption of the TRU being monitored over a predefined time and in real-time;
monitoring, by the controller, a rotational speed of the axle (108) or speed of a trailer associated with the TRU during the trip and correspondingly determining electrical power generated by or available at a generator (106); and
activating, by the controller, the generator for generating and supplying electrical power to the battery and/or the TRU during the trip based on one or more of the predicted electrical power consumptions of the TRU, the real-time SoC of the battery or the amount of energy available in the battery, and the rotational speed of the generator or speed of the trailer or the electrical power available at the generator.

9. The method of claim 8, wherein the method comprises the step of adjusting, by the controller (114), an activation duration of the generator (106) during the trip for enabling the generator to generate and supply a predefined electrical power to the battery (110) for maintaining the SoC of the battery above a predefined SoC level during the trip, wherein the predefined SoC level is selected based the predicted electrical power consumption of the TRU (102) during the trip and a power storage capacity of the battery.

10. The method of claim 9, wherein the method comprises the step of deactivating the generator, by the controller, and enabling supply of the electrical power from the battery to the components of the TRU based on a real-time electrical power consumption of the TRU, when the real-time SoC of the battery is more than the predefined SoC level.

11. The method of claim 9 or 10, wherein when the real-time SoC of the battery (110) reaches a first predefined SoC level, the method comprises the step of activating the generator (106) for generating and supplying the electrical power to the battery until the real-time SoC of the battery reaches a second predefined SoC level, wherein the second predefined SoC level is more than the first predefined SoC level,
or, wherein the method comprises the step of activating the generator, by the controller (114), for generating and supplying the electrical power to the battery to maintain the SoC of the battery above the predefined SoC level while enabling supply of the electrical power from the battery to the components (104) of the TRU (102) based on a real-time electrical power consumption of the TRU, when the real-time SoC of the battery is equal to or below the predefined SoC level.

12. The method of claim 9, 10 or 11, wherein the generator (106) is electrically connected to the one or more components (104) of the TRU (102), wherein when the real-time SoC of the battery (110) is equal to or below the predefined SoC level, the method comprises the step of activating the generator to generate and supply electrical power from the generator to the TRU based on a real-time electrical power consumption of the TRU,
optionally, wherein when the electrical power generated by or available at the generator is determined to be greater than the real-time electrical power consumption of the TRU and the real-time SoC of the battery is monitored to be equal or below the predefined SoC level, the method comprises the step of enabling the generator is supply electrical power from the generator to the TRU based on the real-time electrical power consumption of the TRU and the real-time rotational speed of the axle (108) or speed of the trailer, while supplying a portion of the generated electrical power to the battery to charge the battery.

13. The method of any one of claims 8 to 12, wherein the electrical power generated by or available at the generator (106) is determined based on generator power vs speed characteristic of the generator, wherein the generator power vs one or more speed characteristic is determined based on one or more of the speed of rotation of the axle (108), parameters associated with the trailer and the generator, and one or more road attributes associated with a road on which the trailer is moving during the trip.

14. A power supply control device (200) for a transport refrigeration unit, TRU, (102) equipped with a battery (110) and an axle generator (106), the device comprising:
a controller (114) configured to be operatively connected to the TRU, the generator, and a battery management system, BMS, (112) associated with the battery, wherein the controller comprises one or more processors (202) coupled to a memory (204) storing instructions executable by the processors, which causes the controller to:
monitor a real-time state of charge, SoC, of the battery;
predict electrical power consumption of the TRU for a trip of a predefined duration, based on data pertaining to an average electrical power consumption of the TRU being monitored over a predefined time and in real-time;
monitor rotational speed of the axle (108) or speed of the trailer during the trip and correspondingly determine electrical power generated by or available at the generator; and
activate the generator to generate and supply electrical power to the battery and/or the TRU during the trip based on one or more of the predicted electrical power consumptions of the TRU, the real-time SoC of the battery, and the rotational speed of the axle or speed of the trailer or the electrical power available at the generator,

15. The device of claim 14 wherein the device comprises:
a first set of sensors (116-1) to monitor the electrical power consumed by the one or more components (104) or the TRU in real-time, and monitor the electrical power generated by the generator;
a second set of sensors (116-2) to monitor the real-time state of charge, SoC, of the battery; and
a third set of sensors (116-3) to monitor the rotational speed of the axle, and the one or more road attributes associated with the road during the trip and correspondingly determine electrical power generated by or available at the generator.
